Europäisches Patentamt

European Patent Office

Office européen des brevets

(11) Numéro de publication: **0 365 426**
**A1**

## (12) DEMANDE DE BREVET EUROPEEN

(21) Numéro de dépôt: **89402882.8**

(51) Int. Cl.5: **A47J 37/04**

(22) Date de dépôt: **18.10.89**

(30) Priorité: **19.10.88 FR 8813743**

(43) Date de publication de la demande:
**25.04.90 Bulletin 90/17**

(84) Etats contractants désignés:
**AT BE CH DE ES GB GR IT LI LU NL SE**

(71) Demandeur: **Euve, Guy**
**15 rue du Mas de la Pinède**
**F-33700 Merignac(FR)**

Demandeur: **Euve, née de Biasi, Annette**
**15 rue du Mas de la Pinède**
**F-33700 Merignac(FR)**

(72) Inventeur: **Euve, Guy**
**15 rue du Mas de la Pinède**
**F-33700 Merignac(FR)**
Inventeur: **Euve, née de Biasi, Annette**
**15 rue du Mas de la Pinède**
**F-33700 Merignac(FR)**

(74) Mandataire: **Michelet, Alain et al**
**BUGNION ASSOCIES 55, rue Boissonade**
**F-75014 Paris(FR)**

(54) **Tournebroche vertical.**

(57) Le tournebroche vertical (1) de l'invention permet la cuisson à la ficelle. Il est destiné à être placé entre un organe de suspension (2) et une broche ou attache (3) munie d'un anneau de suspension (4). Il comporte un crochet supérieur (6) destiné à coopérer avec l'organe de suspension (2), un boîtier (7) solidaire du crochet supérieur (6), un crochet inférieur (12), relié au boîtier (7) et libre en rotation par rapport à celui-ci et des moyens d'entraînement (18) incorporés au boitier (7) assurant la rotation uniforme du crochet inférieur (12) par rapport au crochet supérieur (6).

FIG.1

## TOURNEBROCHE VERTICAL

La présente invention concerne un tournebroche vertical qui permet la mise en oeuvre du mode de cuisson traditionnelle appelé "cuisson à la ficelle".

Dans ce mode de cuisson, la pièce à rôtir est animée d'un mouvement de rotation autour d'un axe vertical. Il est aisé de comprendre que l'effet de la gravité sur une pièce mise à rôtir dans ces conditions est totalement différent de celui-ci qu'elle produit lorsque la pièce est animée d'un mouvement de rotation autour d'un axe horizontal.

Cet effet de la gravité, la position de la pièce à rôtir par rapport au foyer... permettent d'obtenir une qualité de cuisson que les connaisseurs apprécient et reconnaissent sans difficulté.

On connaît bien entendu de nombreux dispositifs constituant des tournebroches.

Le premier ensemble de tournebroches connus assure la rotation de la broche et donc de la pièce à rôtir autour d'un axe horizontal. Ce sont les plus nombreux.

Comme exposé plus haut, la qualité de la cuisson obtenue n'est pas comparable à celle des tournebroches verticaux, d'autre part les technologies mises en oeuvre ne sont pas comparables car ces dispositifs ne doivent pas répondre aux mêmes contraintes que celles des tournebroches verticaux.

D'une part, dans les tournebroches dits horizontaux, la gravité et donc le poids de la pièce à rôtir est perpendiculaire à l'axe du dispositif d'entraînement, d'autre part un décentrement de la pièce à rôtir par rapport à la broche nécessite une puissance variable et souvent importante du dispositif d'entraînement.

Pour toutes ces raisons, la transposition des techniques connues dans les rôtissoires à axe horizontal ne peut pas être faite simplement pour obtenir un tournebroche vertical.

Le brevet suisse CH-A-532 387 par exemple décrit un dispositif d'entraînement pour grills. Il s'agit de dispositifs connus utilisés pour les grills horizontaux. Il ne suggère pas qu'un tel dispositif peut être utilisé verticalement et ne prévoit aucun moyen pour soutenir la pièce à griller et accrocher le dispositif lui-même.

Différents dispositifs de cuisson verticale ont également été proposés. Certains d'entre eux (FR 2 464 045, FR 2 013 498) concernent des dispositifs dans lesquels la pièce à rôtir est fixe par rapport à la source de chaleur.

D'autres dispositifs décrits par exemple dans les documents FR 2 379 272 et FR 2 231 343 sont des dispositifs importants et encombrants, incorporant la source de chaleur, et destinés principalement à un usage intensif et professionnel.

Le brevet français FR 2 561 896 décrit par ailleurs un dispositif de cuisson verticale qui comporte un trépied destiné à supporter une broche elle-même entraînée par un moteur. L'ensemble repose sur le sol.

Enfin, le brevet suisse CH-A-544 535 décrit un dispositif de cuisson dans lequel la pièce à rôtir est en rotation autour d'un axe vertical la traversant. L'entraînement de ce dispositif est réalisé par l'exploitation du courant d'air de convection par l'intermédiaire des pales (8).

L'objectif de la présente invention est donc de proposer un dispositif simple, résistant peu encombrant permettant de réaliser la cuisson d'une pièce en assurant sa rotation autour d'un axe vertical.

A cet effet, l'invention concerne un tournebroche vertical permettant la cuisson à la ficelle et destiné à être placé entre un organe de suspension et une broche ou attache munie d'un anneau de suspension comportant un crochet supérieur destiné à coopérer avec l'organe de suspension et un crochet inférieur, destiné à recevoir la broche ou attache. Il comporte un boîtier solidaire du crochet supérieur, que le crochet inférieur est relié au boîtier et libre en rotation par rapport à celui-ci et des moyens d'entraînement incorporés au boîtier assurant la rotation uniforme du crochet inférieur par rapport au crochet supérieur.

L'invention sera décrite plus en détail en référence aux figures dans lesquelles :

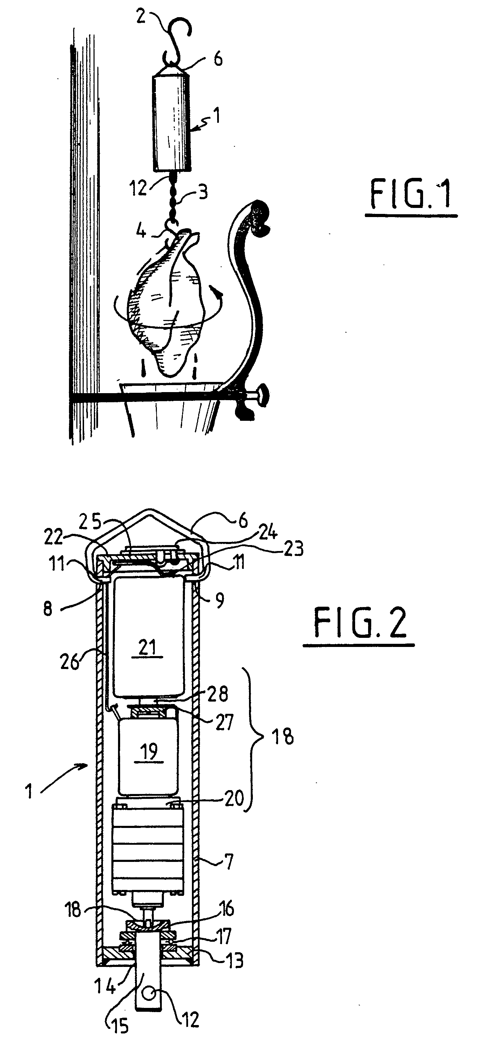

. La figure 1 présente le tournebroche de l'invention vu de l'extérieur, dans son environnement.

. La figure 2 représente une vue en coupe droite du tournebroche de l'invention.

Le tournebroche 1 est destiné à être placé entre un organe de suspension 2 et une broche ou attache 3 munie d'un anneau de suspension 4.

Le tournebroche 1 a pour vocation d'assurer la rotation de la broche ou attache 3 par rapport à l'organe de suspension 2. Il doit à la fois assurer l'entraînement nécessaire à ce mouvement et d'autre part supporter le poids de la broche 3 et de la pièce à rôtir 5.

Ce tournebroche 1 peut être utilisé avec différents types d'organes de suspension 2. Il peut s'agir d'une crémaillère placée à l'intérieur d'une cheminée dans la manière traditionnelle, ce peut être également un crochet porté par un trépied qui pourra être librement positionné par rapport à un foyer ou par rapport à une plaque réfléchissant la chaleur d'un foyer.

Le tournebroche 1 comporte un crochet supérieur 6 destiné à coopérer avec l'organe de suspension 2.

Ce crochet supérieur 6 peut avoir des formes variées. Il peut être ouvert ou fermé. Toutefois, les organes de suspension étant généralement des crochets ouverts il est préféré un crochet supérieur fermé.

Ce crochet supérieur 6 est relié au boîtier 7 du tournebroche 1. De manière préférée, le boîtier 7 du tournebroche 1 a une forme généralement cylindrique. Ce boîtier comporte à sa partie supérieure deux trous 8 et 9 destinés à recevoir les extrémités du crochet supérieur 6 et permettant donc la liaison entre le crochet supérieur 6 et le boîtier 7. Les extrémités du crochet supérieur 6 coopérant avec les trous 8 et 9 étant parallèles et perpendiculaires à l'axe du boîtier 7. Cette liaison est articulée permettant la rotation du crochet supérieur 6 par rapport à ses extrémités 10 et 11.

Le tournebroche 1 comporte à sa partie inférieure un crochet inférieur 12, relié au boîtier et libre en rotation par rapport à celui-ci.

Le boîtier 7 est comme nous l'avons vu de forme généralement cylindrique. Il comporte à sa partie inférieure un fond 13 résistant, et solidement lié à la paroi extérieure du cylindre constitutif du boîtier 7.

Ce fond 13 comporte en son centre une ouverture 14 permettant le libre passage d'un axe 15 solidaire du crochet inférieur 12. Cet axe est lui-même solidaire d'une collerette 16 qui lui est rigidement rattachée ou qui peut même être réalisée dans la même base métallique.

Cette collerette repose sur le fond 13 par l'intermédiaire d'un roulement à billes 17.

Cette disposition permet d'une part de transmettre un effort relativement important, correspondant au poids de la broche et de la pièce à rôtir du crochet inférieur 12 au boîtier 7, tout en permettant la libre rotation de ce crochet 12 autour de l'axe défini par la pièce 15.

Ces efforts transmis au boîtier 7 sont donc transmis au crochet supérieur 6 et par là à l'organe de suspension 2.

Le tournebroche 1 comporte des moyens d'entraînement 18 permettant d'assurer la rotation du crochet inférieur 12 par rapport au boîtier 7 et donc puisque celui-ci est fixe par rapport à l'organe de suspension 2, par rapport à cet organe de suspension.

Ces moyens d'entraînement sont constitués d'un moteur 19 fixe par rapport au boîtier 7 et reliés à la collerette 16 par un réducteur 20. Ce réducteur 20, également fixe par rapport au boîtier 7, coopère avec la collerette 16 par un système carré-gorge.

De manière préférée, le moteur 19 est un moteur électrique alimenté par une pile 21.

La partie supérieure du boîtier 7 est fermée par un couvercle 22 qui dans sa position ouverte permet l'introduction ou l'extraction de la pile 21 et assure son maintien en position fermée.

De plus, ce couvercle comporte un interrupteur 23 composé d'une manette 24 mobile en translation et susceptible dans l'une de ses positions d'assurer le contact par une pièce métallique 25 entre un connecteur 26 relié à l'une des bornes du moteur 27 et l'un des contacts 28 de la pile 21. Le deuxième pôle 29 de la pile 21 étant directement en contact avec le deuxième connecteur 29 du moteur 19.

Le dispositif ainsi décrit peut être compact et dans la réalisation effective a une hauteur inférieure à 25cm, un diamètre de l'ordre de 5cm. Le moteur tourne à environ 9000 tours/mn et le réducteur entraîne le crochet inférieur 12 à une vitesse d'environ 10 tours/mn.

Le dispositif et résistance simples d'usage permettent de faire cuire des pièces ayant un poids pouvant aller jusqu'à 15kg.

## Revendications

1. Tournebroche vertical (1) permettant la cuisson à la ficelle et destiné à être placé entre un organe de suspension (2) et une broche ou attache (3) munie d'un anneau de suspension (4) comportant un crochet supérieur (6) destiné à coopérer avec l'organe de suspension (2) et un crochet inférieur (12), destiné à recevoir la broche ou attache (3), caractérisé en ce qu'il comporte un boîtier (7) solidaire du crochet supérieur (6), que le crochet inférieur (12) est relié au boîtier (7) et libre en rotation par rapport à celui-ci et des moyens d'entraînement (18) incorporés au boitier (7) assurant la rotation uni forme du crochet inférieur (12) par rapport au crochet supérieur (6).

2. Tournebroche vertical selon la revendication 1, caractérisé en ce que les moyens d'entrainement (18) comportent un moteur électrique (19), un réducteur de vitesse (20) et une pile électrique (21).

3. Tournebroche vertical selon la revendication 2, caractérisé en ce que le boîtier (7) comporte des moyens de fixation du moteur (19) et du réducteur de vitesse (20) et un couvercle (22) à sa partie supérieure permettant une position ouverte, l'introduction et l'extraction de la pile (21) et assurant le maintien de cette dernière par rapport au boitier (7) en postion fermée.

4. Tournebroche vertical selon la revendication 3, caractérisé en ce que le couvercle (22) porte un interrupteur (23) commandant le fonctionnement du moteur (19).

5. Tournebroche selon l'une quelconque des revendications 1 à 4, caractérisé en ce que le crochet inférieur (12) est relié au boîtier (7) par l'intermédiaire d'un roulement à billes (17).

FIG.1

FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| D,Y | CH-A-532387 (MELIOR S.A.)<br>* le document en entier * | 1 | A47J37/04 |
| A | | 2-4 | |
| | --- | | |
| D,Y | CH-A-544535 (J.H. GUHL)<br>* figure 1 * | 1 | |
| A | | 5 | |
| | --- | | |
| A | US-A-3387555 (E.F. MORAN)<br>* figure 2 * | 1-3 | |
| | --- | | |
| A | US-A-3448679 (T.C. HOLKA ET AL)<br>* figures 1, 3 * | 1, 5 | |
| | --- | | |
| A | FR-A-613613 (M. ROCHER)<br>* figure 1 * | 1 | |
| | --- | | |
| D,A | FR-A-2561896 (G. GUILLOUX)<br>* le document en entier * | 1 | |
| | ----- | | DOMAINES TECHNIQUES RECHERCHES (Int. Cl.5 )<br><br>A47J |

Le présent rapport a été établi pour toutes les revendications

| Lieu de la recherche | Date d'achèvement de la recherche | Examinateur |
|---|---|---|
| LA HAYE | 16 JANVIER 1990 | SCHARTZ J. |